# EUROPEAN PATENT APPLICATION

(11) **EP 4 831 884 A1**
(43) Date of publication of application: **28.10.2026**
(21) Application number: 24905213.5
(22) Date of filing: 12.12.2024
(51) Int. Cl.: G06Q 10/0631, G06Q 90/00, B41F 17/00

(54) **METHOD FOR ANALYZING THE ENVIRONMENTAL IMPACTS OF DIFFERENT SYSTEMS FOR PRINTING ON PACKAGING**

(30) Priority: 22.12.2023 BR 102023027236
(71) Applicant: All4labels Gráfica do Brasil Ltda., 89032-510 Blumenau (BR)
(72) Inventor: FERRI, Gabriela Neves, 89252-101 Jaraguá do Sul (BR); PILZ, Thaísa Lana, 81280-270 Curitiba (BR); ARAUJO, Jaylton Bonacina De, 80210-260 Curitiba (BR); UGAYA, Cássia, 81200-520 Curitiba (BR)
(74) Representative: Pereira da Cruz, Joao
(86) International application number: PCT/BR2024/050580
(87) International publication number: WO 2025/129305

(57) **Abstract**

The present invention discloses a method for determining the environmental performance of packaging labels, including their printing processes, through the life cycle assessment of the product.

Problem to be solved: the absence of a method for determining the relative environmental performance of packaging labels considering the substrate used, as well as the printing technique and technology.

Solution to the problem: To this end, a simple yet technically robust method is proposed for calculating the environmental impact of producing packaging labels with different printing configurations, comparing the results among them to support the decision-making process and enabling the selection of parameters that provide the best environmental performance outcomes.

## Description

### Technical Field

The present invention relates to the field of product sustainability, specifically to a method for determining the environmental performance of packaging label production and printing through a cradle-to-gate life cycle assessment (LCA) of the product.

### Background of the Invention and state of the art

In recent years, a significant increase has been observed in industry efforts toward adopting an environmentally protective approach throughout the entire supply chain, driven by growing consumer-market requirements, by local environmental policies or policies established in international agreements, and by the possibility of having more sustainable businesses and, consequently, even greater access to available financial flows. According to the United Nations, sustainable development is development that seeks to meet the needs of present society without compromising the ability of future generations to meet their own needs.

Thus, the development, production, and commercialization of more sustainable products has become an obligation for companies, and the way to achieve this objective involves knowing the environmental quality of production processes and products and establishing metrics to assess the environmental performance of the product throughout its useful life. In this context, with a view to the environmental quality of the entire supply chain, life-cycle management of sustainable products is required.

The technique known as Life Cycle Assessment (LCA), as standardized by ISO 14040 (2006), is a widely disseminated technique for assessing the environmental impact of products and services at the various stages of their life cycles.

The LCA tool, according to ABNT (Brazilian Association of Technical Standards, 2009a,b), is the compilation and evaluation of the inputs, outputs, and respective potential environmental impacts of a product system throughout its life cycle, and is subdivided into four phases, the third phase referring to Life Cycle Impact Assessment (LCIA) of a product on the environment, a fundamental component of the present patent application. In other words, LCA is an environmental tool that compares product performance and analyzes which options are or are not viable for the expected functional performance associated with environmental costs (ISO, 2006).

Furthermore, LCA covers all stages of a product system, ranging from the obtainment of the necessary raw materials and energy, manufacturing, use and distribution, through to final disposal of the product, and may include the recycling of materials and components, in addition to other post-consumer treatments.

It should be noted that LCA is used in a wide range of applications and is based on the following objectives, according to the EPA(Environment Protection Agency - USA, 1993): i) establishing a database on resource consumption and waste generated by the product system; (ii) identifying the life-cycle stages of a product or process where reductions in resource consumption and waste generation can be achieved; iii) comparing environmental impacts associated with products, processes, or activities that have the same function; iv) assisting in the development of new products, processes, or activities, allowing improvements in their environmental performance.

There are worldwide database services that inventory, store, and update sustainability indices for each production process around the world, the so-called LCA Databases, such as Ecoinvent version 3.10, ESU Services, Kbob, AgriBaLyse, JRC European Commission, among others. The present invention uses the Ecoinvent LCA database, but is not limited thereto. The Ecoinvent Association is a non-profit organization dedicated to promoting and supporting the availability of environmental data around the world, specializing in the LCA methodology.

In the context of life-cycle assessment of a packaging label, it is relevant to state that said label may have different technical specifications to meet the needs of its consumers, such as area, artwork, durability, permeability, colors, information on technical characteristics, among others, and, accordingly, labels may be produced with different materials and types of printing process, that is, substrates used to suit the desired printing process so as to ensure that it performs its function throughout its life cycle, according to the different conditions of use.

There are few studies in the literature involving methods for assessing the environmental impact of packaging; however, with regard to the life-cycle assessment of packaging labels, this universe is even more limited.

In the state of the art, some solutions already exist relating to a method for assessing the environmental performance of packaging and labels, such as documents US2010030601 and WO2021136874, respectively.

Document US2010030601 already discloses a method for relative sustainability assessment addressing the complete life cycle of a product in the technical field of packaging; said method uses, as a reference scenario, the environmental performance of a product among products of the same family and derives a general sustainability index to perform comparisons. However, said patent document cannot analyse the label, nor even the label printing process.

Patent document WO2021136874, in turn, relates to a method, system, computer program, and service for determining a sustainability indicator of a product label; said document also considers the possibility of comparisons between different labels and performs such comparisons expressed in equivalences.

Document WO2021136874, however, is not capable of addressing label printing processes in determining its environmental performance. Furthermore, another aspect to be considered is that the method disclosed in said document is not capable of differentiating the substrate used in the comparison of environmental performance between labels.

It is reiterated that none of the documents indicated above provides a method that assesses the relative environmental performance of a packaging label while taking into consideration the printing process of said label.

Thus, although the solutions described above prove functional for the objectives for which they were made feasible, it is noted that there are still gaps in the state of the art regarding the provision of a simple, low-cost, and easy-to-use solution for calculating and comparing the environmental performance of the label to be used, considering different printing processes and types of inks to be used in producing the label, thereby enabling decision-making with a view to the most environmentally friendly label.

It is based on this scenario that the invention in question arises.

### Objects of the Invention

A fundamental object of the invention in question is to conceive a method for calculating the environmental impact of producing packaging labels with different printing configurations, which are referred to in this invention as production scenarios, comparing the results with one another to support the decision-making process and allowing selection of parameters that present the best environmental-performance results.

More specifically, an object of the present invention is to present a method for comparing the environmental performance of several packaging-label printing scenarios, considering that a scenario may involve more than one substrate alternative, more than one printing technique and technology alternative, and more than one decoration alternative, generating a wide range of options.

A further object of the present invention is the use of the Life Cycle Impact Assessment (LCIA) tool, as standardized by ISO 14040 (2006), so as to consider the following environmental-impact categories provided in the tool: global warming, water scarcity, abiotic depletion (metals and minerals), abiotic depletion (fossil fuels), acidification, eutrophication, ozone-layer depletion, and photochemical oxidation.

Furthermore, an object of the present invention is to disclose a solution that is simple to use but technically robust;

Another object is to describe a method that calculates environmental-impact indicators so that they are used for management and decision-making.

### Summary of the Invention

Method for analysing environmental impacts of different packaging printing systems for several scenarios, based on the life cycle assessment (LCA) method, from internal label information and external raw-material information, which includes calculating the environmental impact of the label printing technology, comprising the following steps:
✔ mapping the processes involved in the label life cycle;
✔ collecting primary data including company and supplier data; in assembling the inventory, raw production data for a label were not used, but rather data by printing process and other process steps;
✔ calculating the environmental-impact potential;
✔ generating the file with potential environmental-impact data of materials and processes used in label production;
✔ inputting the database file of potential environmental impacts of materials and processes used in label production;
✔ inputting the production-order configuration data (140) through a user interface;
✔ selecting materials, printing processes, and options by scenario;
✔ calculating environmental impacts for 1000 labels;
✔ environmental-impact report;

The life cycle assessment method is based on ISO 14040/44 and LCIA standards.

Said step of mapping the processes involved in the label life cycle comprises at least the following sub-steps:
✔ defining the substrates, inks, and printing processes that will be part of the environmental-impact LCA;
✔ mapping the processes involved in the label life cycle;
✔ identifying inputs and outputs;
✔ identifying inputs and outputs according to the inventory nomenclature standard of an international LCA database used.

The step of collecting the primary data of said method comprises at least the following sub-steps:
✔ collecting data containing at least:
   - description of inputs and outputs;
   - quantity of inputs and outputs;
   - unit of measurement used;
   - useful life of the material and which inventory process of the global sustainability database, which in the embodiment of this invention is Ecoinvent, and is associated with that input or output to which the entry refers;
✔ calculating proportions of energy and material consumption according to the reel dimensions;
✔ preparing the inventory file by process, containing the quantities (mass) and energy consumed, per unit of measurement, of the inputs and outputs of each process;
✔ converting the stored data into a format compatible with platforms / software for sustainability-impact calculations.

The step of calculating the environmental impact potential comprises at least the following sub-steps:
✔ importing the final LCA inventory file into the OpenLCA platform;
✔ defining the Life Cycle Impact Assessment (LCIA) Method and the environmental-impact categories;
✔ calculating, on the OpenLCA platform, the environmental-impact potentials in each environmental-impact category and exporting the respective results to a Potential Environmental Impacts Database file, in a format suitable for use in the next phase of the method.

The production-order configuration step preferably comprises the following input data:
✔ label height in millimeters;
✔ label width in millimeters;
✔ average length of the reel to be printed per production order, in meters;
✔ average width of the reel to be printed, in meters;
✔ number of production orders.

The step of selecting materials, printing processes, and options by scenario includes inputting at least the following information:
✔ the identification of the scenario to be considered;
✔ the label material to be used in the respective scenario which may preferably be selected from a list of pressure-sensitive or shrink sleeve materials available for production, as previously mentioned in this report.
**✔** the printing processes that will occur in the respective scenario and, for each process, whether ink or varnish will be used;
✔ when necessary, whether the printing process involves cold or hot stamping, for each scenario.
✔ whether the waste, in the respective scenario, should or should not be de-characterized.

The step of selecting materials, printing processes, and options by scenario comprises the following sub-steps:
✔ calculating environmental impacts for 1000 labels by processes involved in production;
✔ calculating environmental impacts for 1000 labels by printing processes, considering the number of times the process occurs as a multiplying factor;
✔ calculating environmental impacts for 1000 labels by film consumption for each printing technology, considering the number of times the process occurs as a multiplying factor;
✔ calculating environmental impacts for 1000 labels by selected printing technology, considering the number of times the process occurs as a multiplying factor;
✔ calculating environmental impacts for 1000 labels in ink and varnish consumption, considering the number of times the process occurs as a multiplying factor;
✔ obtaining the sum of all environmental impacts calculated above, which results in the total impact by impact category for 1000 labels.

The production processes involved in a first phase of the method include at least the following macroprocesses:
✔ reel materials and waste;
✔ internal transport of reels and warehouse;
✔ printing processes;
✔ production of the cliché, offset plates, and silk screen;
✔ consumption of inks and varnishes;
**✔** cutting of reels;
✔ verification process;
**✔** de-characterization process of printing waste.

The calculation of the environmental impact in a first and in a second phase of the method includes at least the following impact categories:
✔ abiotic depletion (minerals and metals);
**✔** abiotic depletion (fossil fuels);
**✔** acidification;
✔ eutrophication;
✔ global warming;
✔ ozone-layer depletion;
✔ photochemical oxidation;
✔ water scarcity.

In the materials-selection step, the facestock of the pressure-sensitive material may include, for each scenario, one of a plurality of materials with acrylic adhesive, in combination with PET or glassine liner.

In the materials-selection step, the substrate of the selected shrink sleeve label may include, for each scenario, PETg andPVC films in different thicknesses and shrink forces.

The printing process for pressure-sensitive material includes at least one of the following techniques: flexography, rotogravure, screen printing, offset, Cold and hot stamping and the printing process for shrink sleeve labels includes at least one of the following techniques: flexography and rotogravure.

The printing technology used is considered in the calculation of the environmental impact of the label.

The resulting total environmental impact in each category is expressed in equivalences for each of the compared scenarios.

Furthermore, it is possible to update said method with new materials, processes, and technologies for calculating environmental impact.

Said method is capable of generating environmental-performance comparisons of several label printing scenarios simultaneously.

### Brief Description of the Figures

The invention in question will be detailed primarily on the basis of the illustrative figures listed below; however, it should be understood that the invention is not limited in its application to the processes, steps, and materials disclosed herein to describe the present invention. Accordingly:
Figure 1 illustrates, in a flow diagram, the method described in the present invention.
Figure 2 illustrates the processes involved in the life cycle of the packaging label, according to a preferred embodiment of the invention;
Figure 3 illustrates, in a flow diagram, an overview of the environmental-impact calculation, according to a preferred embodiment of the invention;
Figure 4a illustrates, by way of example, the environmental-performance summary of each scenario because of applying the method, by environmental-impact category, according to an embodiment of the invention.
Figure 4b graphically illustrates, by way of example, the environmental performance of each scenario because of applying the method, by environmental-impact category, according to an embodiment of the invention.
Figure 4c illustrates, by way of example, the environmental performance of each scenario because of applying the method, by equivalence for some environmental-impact categories, according to an embodiment of the invention.

### Detailed Description of the Invention

The present invention relates to a method that calculates the total environmental impact of a packaging label manufactured by a company, considering from the production of the raw material, whatever it is and wherever it was produced, up to the point at which the label is finished, that is, before it leaves the company toward the customer (cradle to gate), considering, but not limited to, the processes of raw-material production, inks, transport, storage, transport within the company, reel cutting, ink mixing, offset-plate engraving, cliché engraving, engraving and cleaning of the silk screen, reel printing, label inspection, and de-characterization of labels, when necessary.

The environmental-impact results, by way of example of an embodiment of this invention, are proportional to the inputs and outputs of materials and outputs of waste from the printing and inspection processes for a reel having an area of 3000 m², said reel specifically having dimensions of 3000 m in length and 1000 mm in width, with the result of the possible environmental impact parameterized for 1000 labels. Said dimensions are references for calculating environmental impact but are not limiting of the present invention.

For the description of the method, some concepts considered in this report are presented below; some references are also made to materials or processes that should not be considered in this document as limiting the invention, as they refer to one of its possible embodiments.

The environmental-impact categories considered above and based on ISO 14040, 14041, and 14044 rules are described below in greater detail:
- Global warming: quantification of the impact of greenhouse gas emissions due to human activities on climate change. These impacts are aggregated into a common unit, such as CO2 eq (carbon dioxide equivalent). Since 1990, Global Warming Potential (GWP) has been used as the standard measure for this category, with GWP100a being the most common indicator in LCA studies and measured in kg CO2 eq;
- Water scarcity: water consumption may lead to deprivation and negative impacts on human health and ecosystem quality. Thus, water scarcity may be defined as the imbalance between water availability and demand, aspects that vary according to the conditions of the region studied. In this category, the potential impact is represented in m3 eq (cubic meters of water equivalent);
- Abiotic depletion, elements: consumption of mineral resources, which includes the removal of metals from nature. In this category, the potential impact is represented in kg Sb eq. (kilograms of antimony equivalent);
- Abiotic depletion, fossil fuels: consumption of fossil fuels, including coal, natural gas, methane, crude oil, etc. In this category, the potential impact is represented in MJ (megajoules);
- Acidification: acidification addresses the impact relating to processes that increase the acidity of water and soil systems through the concentration of hydrogen ions. Acidity negatively affects soil fertility and compromises the production capacity of most agricultural soils. In this category, the potential impact is represented in kg SO2 eq. (kilograms of sulfur dioxide equivalent);
- Eutrophication: the process that begins when ecosystems receive excessive inputs of limiting nutrients (usually nitrogen or phosphorus). Thus, if the input of limiting nutrients into an aquatic system exceeds the capacity of that system to assimilate those nutrients, the structure and functioning of the ecosystem may change, resulting in changes in habitat and organic-matter respiration and causing reduced oxygen concentration in the water. In this category, the impact is measured in kg PO4--- eq (kilograms of phosphate equivalent);
- Ozone-layer destruction: ozone depletion occurs if the rate of ozone depletion increases due to the loss of anthropogenic substances that persist in the atmosphere. Stratospheric ozone, which is 90% of total ozone in the atmosphere, is vital to life because it prevents harmful solar UV-B ultraviolet radiation from penetrating the lower levels of the atmosphere. In this category, the impact is represented in kg CFC-11 eq. (kilograms of trichloromonofluoromethane equivalent);
- Photochemical oxidation: the negative impacts of photochemically generated pollutants are due to their reactive nature, which allows them to oxidize organic molecules on the surfaces they expose. Impacts on humans arise when ozone and other reactive oxygen compounds are inhaled and meet the surface of the respiratory tract, where they damage tissues and cause respiratory diseases. Impacts on vegetation arise when reactive compounds attack plant surfaces or enter the stomata of plant leaves and cause oxidative damage to photosynthetic organelles. Impacts on artificial materials are caused by oxidation and damage to many types of organic materials exposed to ambient air. In this category, the potential impact is represented in kg NMVOC eq (kilogram of non-methane volatile organic compounds).

A label is the identity element to be applied to product packaging, presenting its information, and must be produced with appropriate substrates according to the industry, the conditions to which the product is exposed, and the function intended for the label throughout its useful life.

The substrate, in the context of the graphic industry, is the support that will receive the printing, may have several layers, and may be, for example, of the pressure-sensitive or shrink sleeve material.

Pressure-sensitive material may have different printing surface treatments, which must be carefully chosen considering each label need.

The pressure-sensitive material consists of an assembly containing facestock, adhesive, and liner. The pressure-sensitive assembly may be composed of several materials; in the present LCA study, eight materials with acrylic adhesive, in combination with PET or glassine liner, were considered for the facestock;all assemblies contain options with different basis weights and, consequently, different masses in the inventory, resulting in many alternatives.

shrink sleeve labels are made of durable and waterproof films and are generally designed to be placed on the outside of rounded containers, such as bottles and jars, and shrunk using heat to conform to the shape of the packaging.

Likewise, the substrate of the shrink sleeve label may be composed of several types of materials; for this LCA study, PETg and PVC films in different thicknesses and shrink forces were considered. In this study, no primary data from the industry that produces shrink sleeve film were considered.

The substrates of pressure-sensitive and shrink sleeve materials ls undergo printing processes using different techniques: flexography, rotogravure, screen printing, offset, cold and hot stamping.

In this report, the expressions cold and hot stamping are literal translations of cold stamping and hot stamping, respectively. Cold stamping is also usually called cold foil. These expressions may be used throughout this report in either form.

Furthermore, each of the printing processes cited above may be carried out by machines of different technologies in operation at the company; by way of example, the machines of different technologies are called, in the embodiment of the present invention, ECS, MO4, and FA6, wherein ECS machines use the flexographic process combined with screen printing, applicable to printing pressure-sensitive and shrink sleeve materials; MO4 machines combine flexography, offset, rotogravure, and screen-printing processes, applicable to printing pressure-sensitive and shrink sleeve materials; and FA6-type machines are predominantly composed of flexography, with the possibility of using rotogravure for printing pressure-sensitive and shrink sleeve materials.

For didactic purposes, the following definitions of company, supplier, and user are considered in this report. Company is understood as the organization that is the object of the study, that is, in which the environmental-performance calculation of the packaging label is being determined. Supplier is further understood as all entity that is part of the company's production chain in supplying raw material. Finally, user is understood as a company employee responsible for operating and executing said method.

For didactic purposes, the method is presented in two phases. Phase 1 (F1) is characterized by the structuring of the environmental-impact database, and phase 2 (F2) is characterized by the method for generating the environmental-impact report of the printed label.

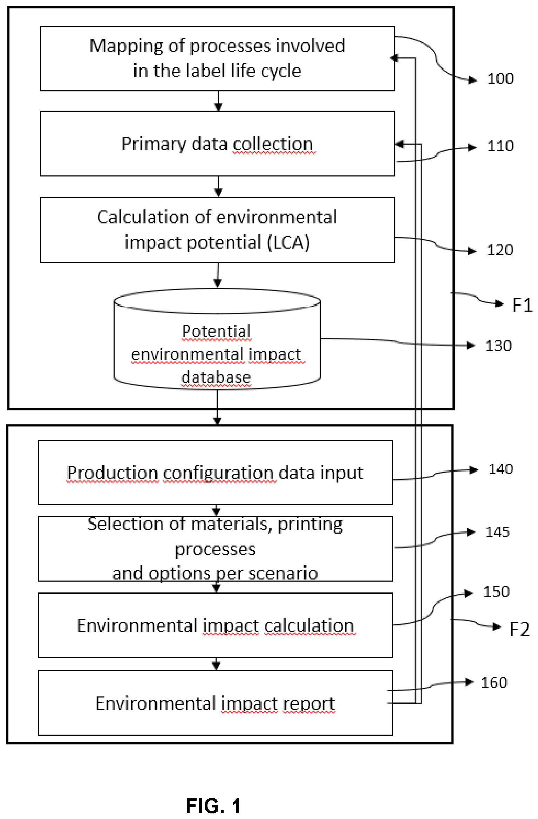

Figure 1 illustrates, in a flow diagram, the overview of the method of the present invention: the phase of structuring the environmental-impact database F1 and the phase of preparing the environmental-impact calculations, environmental-impact report, and process updating F2, the latter comprising the processes of the main tool of the present invention, referred to herein in this report as STARLIFE. It is in this phase F2 of the method that the greatest differentiating feature of the present invention is understood to reside.

The environmental-impact database structuring phase F1 comprises at least the following steps:
✔ mapping the processes involved in the label life cycle 100;
✔ collecting primary data 110, which includes company and supplier data;
✔ calculating the environmental-impact potential 120; and
✔ generating the file with environmental-impact data 130.

The step of mapping the label life-cycle processes 100 includes at least the following sub-steps:
- defining and selecting the products that will be part of the environmental impact LCA analysis;
- mapping the processes involved in the label life cycle;
- identifying the inputs and outputs of materials, energy, and waste from the activities performed in each of the processes, which may include, for example, the warehouse, printing area, ink laboratory, cliché-making area, and de-characterization area;
- adjusting the collected data and verifying the data so that they are allocated to the functional unit and divided between the printing processes, considering that several configurations are possible in the printer to superimpose layers of ink and foil;
- Associating said inputs and outputs according to the inventory nomenclature standard of an international LCA database used. In the case of the present invention, the Ecoinvent database is used by way of example. This association is, in other words, a mapping from the internally used name of the input and output activities/elements to the names of existing processes in the Ecoinvent platform, said platform being chosen in the present invention by way of example as the reference database; however, it should be emphasized that the invention is not necessarily limited to this platform. Thus, unique identifiers are assigned to the flows and their processes in Ecoinvent for each corresponding flow used in the data-collection file. As a result of mapping the processes, a database is obtained in which the Ecoinvent processes have already been inserted.

With the database resulting from the previous step, the primary-data collection step 110 is then carried out, comprising at least the following sub-steps:
✔ collecting the data, which may preferably, for collection convenience, be in spreadsheet format, preferably containing the following data:
   - description of inputs and outputs;
   - quantity of inputs and outputs;
   - unit of measurement used;
   - Description of the calculation and method for measuring inputs and outputs.;
   - information on completeness;
   - reliability;
   - geographical correlation (place of study);
   - technological correlation (company-related ted data);
   - temporal correlation (data relating to which period);
   - Destination of output processes;
   - Useful life of the material
   - Identification of the inventory process of the global sustainability database (Ecoinvent processes, for example) that is associated with that input or output to which the entry refers;
✔ calculating proportions of energy and material consumption according to the reference flow, that is, a reel with a printed area of 3000 m², namely a reel of 3000 m in length and 1000 mm in width, as previously mentioned;
✔ preparing the inventory file by process, containing the quantities (mass)and energy consumed, per unit of measurement, of the inputs and outputs of each process;
✔ from said inventory file by process, and using an appropriate computer language, converting the data stored in said final inventory file into a format compatible with environmental-impact and sustainability assessment platforms for LCA studies. For purposes of describing the present invention, but without limiting the invention, the OpenLCA environmental-impact and sustainability assessment platform is used, which is open-source software specialized in sustainability-impact assessment, for calculating potential environmental impacts in each of the environmental-impact categories. The format of the final inventory file is converted into an LCA inventory file, which may be ILCD, but is not limitedthereto, as it is a widely used format in the market.

The next step relates to calculating the environmental-impact potential 120 of the inputs and outputs of each process mapped in the previous step. This process comprises the following sub-steps:
✔ importing the final LCA inventory file into the OpenLCA platform;
✔ defining the Life Cycle Impact Assessment (LCIA) Method and the environmental-impact categories, which in a possible embodiment of this invention, but not limited thereto, are the following: abiotic depletion-elements; abiotic depletion-fossil fuels; acidification; eutrophication; global warming (measured as GWP100 or Global Warming Potential over100 years); ozone-layer depletion; photochemical oxidation; water scarcity;
✔ for each production process involved, the environmental-impact potentials in each category described above are calculated on the OpenLCA platform, and their results are exported to a file 130 in a format suitable for use in the next phase of the method, preferably in spreadsheet format.

Figure 1 also schematically illustrates phase 2 of the method F2, that is, the processes that form one of the main differentiating features of the present invention, referred to herein in this report as STARLIFE. This phase allows calculation of the environmental impact for various printing scenarios, with different materials and printing processes for comparison of environmental impacts between said scenarios, and comprises at least the following steps:
✔ inputting the Potential Environmental Impacts Database file 130;
**✔** inputting the production-order configuration data 140 through a user interface;
✔ selecting materials, printing technologies, and options by scenario 145;
✔ calculating environmental impacts 150;
✔ environmental-impact report of label production 160;

The step of inputting the Potential Environmental Impacts Database file 130 contains the impact-assessment results of the production processes obtained in phase 1 of the present method of this invention.

The step of inputting the production-order configuration data 140, entered through a user interface, preferably comprises the following input data:
✔ label height in millimeters;
✔ label width in millimeters;
✔ average length of the reel to be printed per production order, in meters;
✔ average width of the reel to be printed, in meters;
✔ number of production orders.

If the user does not enter the reel dimensions, default values will be adopted, which in the preferred embodiment of this invention will be: 3000 meters of linear reel length, 1000 mm reel width, and 1 (one) production order.

Different production scenarios are entered so that the environmental-impact report can present comparisons between several scenarios, making it possible to identify the best environmental performance in each of the environmental-impact categories.

The step of selecting materials, printing processes, and options by scenario 145 includes inputting at least the following information:
✔ the identification of the scenario to be considered;
✔ the material to be used in printing the label in the respective scenario; the material options may preferably be between pressure-sensitive or shrink sleeve materials, from a list of types available for production, as previously mentioned in this report.
✔ the printing processes that will occur in the respective scenario and, for each process, whether ink or varnish will be used;
✔ when necessary, whether the printing process involves cold stamping or hot stamping, for each scenario.
✔ whether the waste, in the respective scenario, should or should not be de-characterized.

Based on the steps of inputting the production-order configuration data 140 and selecting the materials, printing processes, and options by scenario 145 provided by the user and on the potential environmental impacts database 130, the environmental-impact calculation 150 is performed, comprising the following sub-steps:
✔ calculating the environmental impacts for 1000 labels by processes involved in production (for example, materials and waste, internal transport of raw material, internal transport of reel and storage, etc.), selected in each scenario, in the different printing processes, for each impact category (for example, abiotic depletion-elements, abiotic depletion-fossil fuels, acidification,etc.);
✔ calculating the environmental impacts for 1000 labels by printing processes selected in each scenario, for each impact category (for example, abiotic depletion-elements, abiotic depletion-fossil fuels, acidification, etc.), considering the number of times the process occurs as a multiplying factor;
✔ calculating the environmental impacts for 1000 labels by film consumption for each printing technology (for example, consumption for cold foil and consumption for hot stamping, measured as waste impact), selected in each scenario, for each impact category (for example, abiotic depletion-elements, abiotic depletion-fossil fuels, acidification, etc.), considering the number of times the process occurs as a multiplying factor;
**✔** calculating the environmental impacts for 1000 labels by selected printing technology (for example, consumption for cold foil and consumption for hot stamping) for each impact category (for example, abiotic depletion-elements, abiotic depletion-fossil fuels, acidification, etc.), considering the number of times the process occurs as a multiplying factor;
✔ calculating the environmental impacts for 1000 labels in the consumption of ink and varnish by printing technique, for each impact category (abiotic depletion-elements, abiotic depletion-fossil fuels, acidification, etc.), considering the number of times the process occurs as a multiplying factor;
✔ obtaining the sum of all environmental impacts calculated above, which results in the total impact by impact category for 1000 labels.

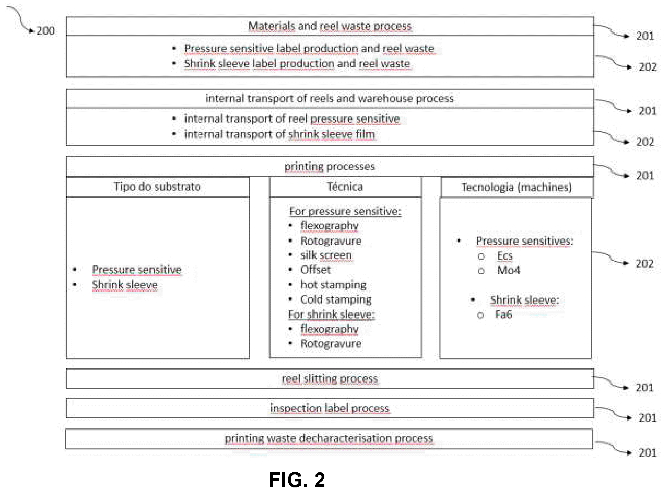

Figure 2 details the main processes 200 of the method according to an example embodiment of this invention. The macroprocesses 201 and respective processes 202 involved in producing the labels are presented, according to a preferred embodiment of the invention, said processes having already been mentioned previously in this report. By way of a possible embodiment of this invention, the following production macroprocesses are preferably considered, but not limited thereto:
✔ Reel materials and waste;
✔ Internal transport of raw material and warehouse;
✔ Printing;
✔ Production of the cliché, offset plates, and silk screen;
✔ Consumption of inks and varnishes;
✔ Cutting of reels;
✔ Label inspection process;
✔ De-characterization process of printing waste.

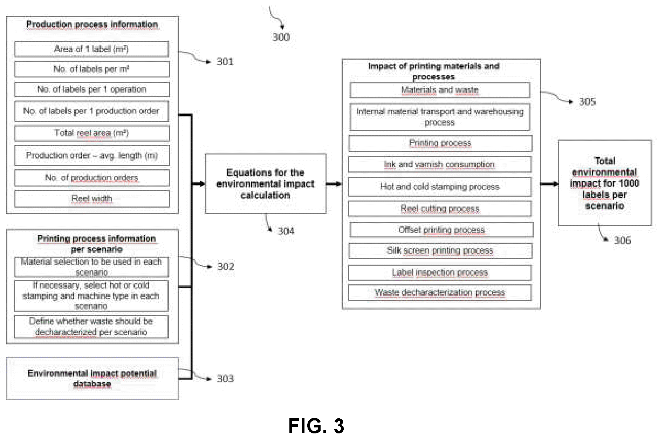

Figure 3, in a flow diagram 300, presents another schematic view of the second phase F2 of the method, focusing on inputs and outputs and the mathematical modeling of the environmental-impact calculation. The minimum necessary information of the production process 301 and minimum necessary information of the printing process 302, by scenario are presented for calculating the environmental impact. Such information was already represented in the steps of inputting production-configuration data 140 and selecting materials, printing processes, and options by scenario 145, illustrated in Figure 1.

Also in Figure 3, as input information, the step of inputting the potential environmental impacts database 303 from OpenLCA is represented, said database having already been mentioned in Figure 1 as 130.

This information is used in equations for calculating the environmental impact 304 of the materials and printing process, said equations being presented later in this report.

Next, the impacts of the materials and printing processes mapped by scenario 305 are calculated and, finally, all environmental impacts are totaled to obtain the total environmental impact for 1000 labels per simulated scenario 306.

The equations used to dimension the impact of the materials and printing processes cited above, in the preferred embodiment of this invention, are presented below;
- **reel materials and waste**
   quantification of the environmental impact of material production and reel waste: ${Impact}_{i} material = \left(\frac{\left(\frac{{Impact}_{i} material stated}{3000 }\right)}{{n}^{{o}_{¯}} labels per {m}^{2}}\right) \times 1000$ where:
   Impact_*i*_material: impact of category i for the stated material, scaled to 1,000 labels;
   Impact_*i*_material_stated: impact of category i for the stated material from the potential environmental impact database (130);
- **internal material transport and warehouse**
   the impact of the internal transport of reels and warehouse storage was preferably calculated using the following equations: $\begin{matrix}Impact i transport stated reel \\ = \left(\frac{{Impact}_{i} transport \times area of stated reel \times {n}^{{o}_{¯}} OP}{3000}\right)\end{matrix}$
   - where:
      - Impact_*i*_transport_stated_reel: impact of category i for transport of the reel area (m²) for the stated configuration;
      - Impact_*i*_transport: impact of category i for transport of the stated material, from the potential environmental impact database (130);
      - N_OP: number of production orders; ${Impact}_{i} transport = \left(\frac{{Impact}_{i} transport stated reel}{{n}^{{o}_{¯}} labels for reel area}\right) \times 1000$
      - where:
         - *I*mpactᵢ transport: impact of category *i* for transport of the stated material, scaled to 1,000 labels;
         - *Impactᵢ transport stated reel:* impact of category *i* for transport of the reel area (m²) for the stated configuration;
         - *n*º *labels for reel area:* total number of labels for 1 (one) operation;${Impacto}_{i} transport = \left(\frac{{Impacto}_{i} transport para a quantidade de reel reported}{{n}^{ο} rótulos para a área da reel}\right) \times 1000$ where:
            - *I*mpactᵢ transport: impact of category i for transport of the stated material, scaled to 1,000 labels;
            - *Impactᵢ transport stated reel:* impact of category *i* for transport of the reel area (m²) for the stated configuration;
            - *nº labels for reel area:* total number of labels for 1 (one) operation;
- **printing process and production of the offset plate, the cliché, and the silk screen**
   for quantifying the environmental impacts of flexographic, offset, rotogravure, and screen-printing processes, the following equation is preferably employed, irrespective of the printing technology adopted and independently of the particular equipment used. Besides the impacts generated by the printing processes themselves, the impacts associated with the manufacture of the offset plate, flexographic plate (cliché), and screen-printing screen are likewise quantified, as described below.
   - Printing Process: to quantify the environmental impacts associated with flexographic, offset, rotogravure, and screen-printing processes, the following equation is applied to any printing technology selected. $\begin{matrix}{Impact}_{i} print \\ = \left(\frac{\frac{Qty process \times {Impact}_{i} process stated \times Linear length}{3000}}{{n}^{{ο}_{¯}} labels}\right) \times 1000\end{matrix}$ where:
      *I*mpactᵢ print: impact of category i for the stated printing process, scaled to 1,000 labels;
      Qty_process: number of times the printing process occurs in 1 (one) production order, multiplied by the number of production orders;
      *Impactᵢ process stated:* impact of category i for the stated printing process, from the environmental impact database (130);
      *Linear length:* average length to be printed per production order (metres);
      *nº labels:* total number of labels for all production orders;
   - Offset plate production: ${Impact}_{i} offset plate = \left(\frac{{Impact}_{i} offset plate prodction \times {n}^{{o}_{¯}} OP}{{n}^{{o}_{¯}} labels }\right) \times 1000$ where:
      Impact_*i*_offset_plate: impact of category i for offset plate production, scaled to 1,000 labels;
      Impact_*i*_offset_plate_production: impact of category i for production of 1 (one) offset plate, from the environmental impact database (130);
      *nº OP:* number of production orders;
      *nº labels:* total number of labels for all production orders;
   - Flexo plate production: $\begin{matrix}{Impacto}_{i} flexo plate \\ = \left(\frac{{Impacto}_{i} flexo plate prodiction \times {n}^{{o}_{¯}} OP}{{n}^{{o}_{¯}} r ó tulos}\right) \\ \times 1000\end{matrix}$ where:
      Impact_*i*_flexo plate: impact of category *i* for flexo plate production, scaled to 1,000 labels;
      Impact_*i*_flexo plate production: impact of category *i* for production of 1 (one) flexo plate, from the environmental impact database (130);
      N°_OP: number of production orders; n°_labels: total number of labels for all production orders;
   - Silk screen production: ${Impact}_{i} silk = \left(\frac{\frac{{Impact}_{i} silk production}{{n}^{{o}_{¯}} OP}}{{n}^{{o}_{¯}} labels}\right) \times 1000$ where:
      Impact_i_silk: impact of category i for silk screen production, scaled to 1,000 labels;
      Impact_*i_*silk_production: impact of category *i* for production of 1 (one) silk screen, from the environmental impact database (130);
      N_OP: number of production orders;
      N_labels: total number of labels for all production orders;
- **Consumption of inks and varnishes**
   The impact of ink and varnish consumption was quantified according to substrate type, technique and technology used, where:
   - The substrates considered in the printing process according to one embodiment of the present invention, but not necessarily limited thereto, as illustrated in Figure 2, comprise pressure-sensitive labels and shrink sleeve labels;
   - The printing techniques applicable to pressure-sensitive labels according to one embodiment of the present invention, but not necessarily limited thereto, as illustrated in Figure 2, comprise flexography, rotogravure, screen printing, cold foil, and hot stamping;
   - The printing techniques applicable to shrink sleeve labels according to one embodiment of the present invention, but not necessarily limited thereto, as illustrated in Figure 2, comprise flexography and rotogravure;
   - The printing technologies employed according to one embodiment of the present invention, but not necessarily limited thereto, as illustrated in Figure 2, for pressure-sensitive labels comprise:
      ✔ Flexography;
      ✔ Rotogravure;
      ✔ Offset;
      ✔ Silk Screen;
      ✔ Cold and hot stamping.
   Equations were adopted for each combination of printing process, inks/varnishes and technology:
   - Printing process according to substrate type, printing technique, and printing technology $\begin{matrix}{Impact}_{i} inks \\ = {\sum }_{j} {\sum }_{k} {\sum }_{l} \left(\frac{\frac{{Impact}_{i} inks {substrato}_{j} of {technique}_{k} of {technology}_{l}}{Tech {Factor}_{l}}}{{n}^{{o}_{¯}} labels per {m}^{2} of reel}\right) \\ \times 1000\end{matrix}$ where:
      Impact_*i*_inks: impact of category *i* for ink and varnish consumption, scaled to 1,000 labels;
      Impact_i_inks_subst_j_tech_k_tech *_l*: impact of category i using substrate j with printing technique k and technology I, from the environmental impact database (130);
      TechFactor_*l*: impact reduction factor for technology I;
      Technology factors (TechFactor_*l*) for the preferred embodiment of this invention:
      - Flexography for pressure sensitive labels (ECS): 709.751665657177;
      - Flexography for pressure sensitive labels (MO4): 804.507760895984;
      - Flexography for shrink sleeve labels: 1,578.3989623964;
      - Offset for pressure sensitive labels: 804.507760895984;
      - Rotogravure for pressure sensitive labels: 838.425284874046;
      - Rotogravure for shrink sleeve labels: 1,578.3989623964;
      - Silk screen for pressure sensitive labels: 669;
      - Cold / hot stamping: 382.677283163926;
   - Cold and Hot Stamping Printing Process
      for the stamping printing process, the equation below calculates the impact of applying the foil to the label (while the ink/varnish equation above calculates the material consumption impact): $\begin{matrix}{Impact}_{i} cold / hot stamping process \\ = \left(\frac{\left(\frac{Qty process \times {Impact}_{i} cold / hot stamp}{3000}\right)}{{n}^{{ο}_{¯}} labels}\right) \times 1000\end{matrix}$ where:
      Impact_i_cold / hot stamping process: impact of category i for the cold/hot stamping printing process, scaled to 1,000 labels;
      Qty_process: number of times the process occurs in 1 (one) production order, multiplied by the number of production orders;
      Impact_i_cold/hot_stamping: impact of category i for the cold/hot stamping printing process, from the environmental impact database (130);
      N_labels: total number of labels for all production orders;
- **Reel cutting process**
   The environmental impact associated with the reel cutting process is calculated using the equation below: ${Impact}_{i} slitting = \left(\frac{\left(\frac{{Impact}_{i} slitting \times Linear lenght}{3000 }\right) \times {n}^{{o}_{¯}} OP}{{n}^{{o}_{¯}} labels}\right) \times 1000$ where:
   Impact_*i_*slitting (result): impact of category i for the reel slitting process, scaled to 1,000 labels;
   Impact_*i*_slitting (db): impact of category *i* for the reel slitting process, from the environmental impact database (130);
   *nº OP:* number of production orders;
   *nº labels:* total number of labels for all production orders;
- **Label verification process**
   for quantifying the impacts of the label inspection processes, the following equation is preferably applied: ${Impact}_{i} inspection = \left(\frac{\left(\frac{{Impact}_{i} inspection \times Linear lenght}{3000}\right) \times {n}^{{o}_{¯}} OP}{{n}^{{o}_{¯}} labels}\right) \times 1000$ where:
   Impact_*i*_nspection (result): impact of category i for the inspection process, scaled to 1,000 labels;
   Impact_*i*_inspection (db): impact of category i for the inspection process, from the environmental impact database (130);
   *nº OP:* number of production orders; N_labels: total number of labels for all production orders;
- **Waste de-characterization process**
   dimensioning the impact of the printing-waste de-characterization process was calculated using the following equation: ${Impact}_{i} dechact = \left(\frac{\left(\frac{{Impact}_{i} dechat \times reel area \times {n}^{{o}_{¯}} OP}{3000}\right)}{{n}^{{o}_{¯}} labels per OP}\right) \times 1000$ where:
   Impact_*i*_dechact (result): impact of category i for the decharacterisation process, scaled to 1,000 labels;
   Impact_i_dechact (db): impact of category i for the decharacterisation process, from the environmental impact database (130);
   *nº OP:* number of production orders;
   n°_labels_per_OP: total number of labels for one production order;
- Total impact for 1000 labels
   finally, after dimensioning the impact in all steps, the total impact for 1000 labels was calculated, for each label-production scenario, using the equation: $\begin{matrix}{Impacto}_{i} total = {Impacto}_{i} material + {Impacto}_{i} transport \\ + {Impacto}_{i} printing process \\ + {Impacto}_{i} ink and varnish consumption \\ + {Impacto}_{i} processo cold / hot stamping \\ + {Impacto}_{i} cutting process + {Impacto}_{i} processo verification \\ + {Impacto}_{i} processo de - characterization\end{matrix}$ where:
   Impact *i* total = sum of the impact for category *i* considering the entire production process, for 1000 labels.

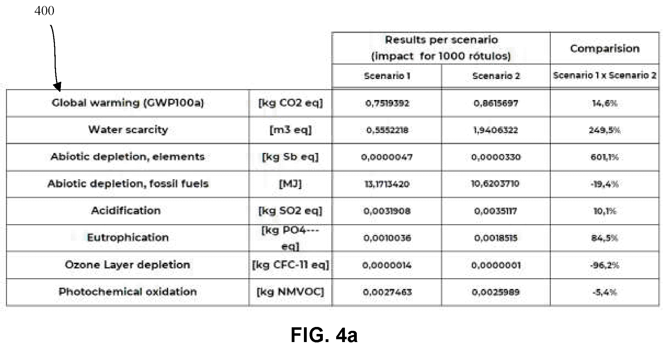

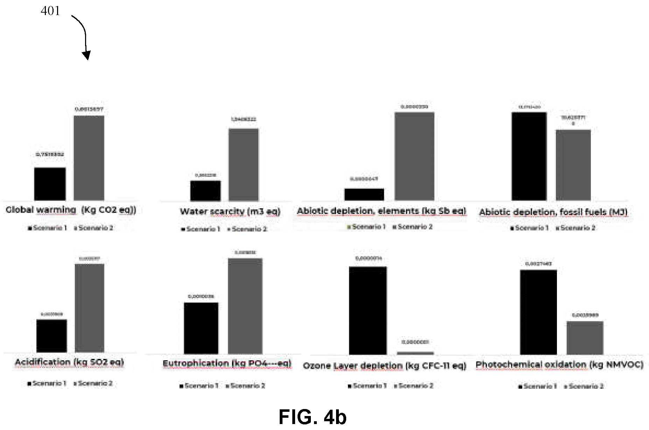

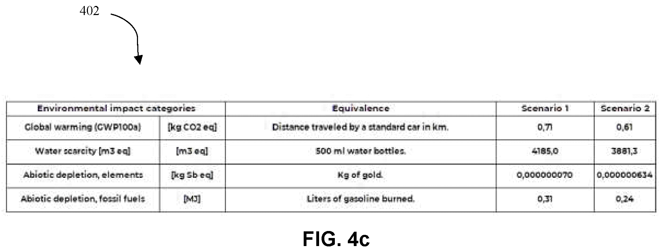

After processing the environmental-impact calculations described above, the method presents the environmental-performance summary of each scenario 400, as illustrated in Figure 4 by way of example of an embodiment of the invention with only two comparison scenarios.

The method reported herein may receive updates with information on the environmental impact of new materials, processes, and technologies for calculating environmental impact. To insert a new process, material, or technology, the following steps must be followed:
In phase F1 of the method, according to Figure 1:
   a. return to the step of Mapping the label life-cycle processes 100 and map the inputs and outputs of the new process. If the process already exists, return from the step of Collecting primary data 110;
   b. perform the calculation of the environmental-impact potential 120 in the LCA software; and
   c. generate the file with environmental-impact data 130;
in phase F2 of the method, according to Figure 1:
   d. update the Input of production-configuration data 145 for selecting materials and processes;
   e. update the method calculation programming for dimensioning the impact of each environmental-impact category for 1000 labels based on the equations presented in this report;
   f. calculate the Environmental impacts 150;
   g. issue the Environmental-impact Report 160;

Figure 4a illustrates the final result of the method, comparing the environmental performance of each scenario 400 in each of the impact categories. In the example in question, scenario 1 had better performance in the environmental-impact categories of global warming, water scarcity, abiotic depletion-elements, acidification, and eutrophication. In the other impact categories, such as abiotic depletion-fossil fuels, ozone-layer depletion, and photochemical oxidation, scenario 2 showed better performance. This result allows the selection of materials, printing processes, and other label-production options that have better environmental performance from the company's perspective.

Figure 4b illustrates, by way of example, the same environmental-performance report in graphic form 401, visually identifying the best performances in each impact category for each scenario.

Figure 4c illustrates, by way of example, for some environmental-impact categories, the impact equivalence 402 in known measures, such as distance travelled by a popular car in km, consumption of 500 mL water bottles, weight in gold, and consumption of liters of gasoline.

Therefore, the object of the present patent application consists of a method for calculating the environmental impact of packaging labels, said method being capable of performing comparisons between several distinct scenarios of packaging production and printing options, thereby allowing assistance in the decision-making process for choosing the most suitable packaging configuration possible from a sustainable point of view.

The method has an innovative character in that it allows, in an agile manner (without direct use of LCA software, which consumes considerable computational time for inventory registration and impact calculation), calculation of the environmental-impact-potential result for different configurations. No publication was found that dealt with a method for comparing the environmental impact of packaging-label printing processes by means of complete product life-cycle assessment.

The invention disclosed herein has industrial application, considering that it can be repeatedly used to assess the environmental impact of a label printing configuration as well as to compare such impact with available label-production alternatives, and is directed to the entire industry that manufactures and commercializes products on the market.

It is important to emphasize that the description above has the sole purpose of describing, by way of example, the particular embodiment of the invention in question. Therefore, it becomes clear that modifications, variations, and constructive combinations of elements that perform the same function, in substantially the same way, to achieve the same results remain within the scope of protection of the invention defined by the appended claims.

## Claims

1. Method for analyzing environmental impacts of different printing systems in packaging for various scenarios, based on the life cycle assessment (LCA) method, from internal label information and external raw material information, initially considering the following steps:
✔ mapping the processes involved in the label life cycle (100);
✔ collection of primary data (110), including company and supplier data;
✔ calculation of the potential environmental impact (120),
**CHARACTERIZED** por said method including the environmental impact calculation of the label printing technology, comprising the following steps:
✔ generation of the file with potential environmental impact data of materials and processes used in label production (130).
✔ entry of production order configuration data (140), through a user interface;
✔ selection of materials, printing processes and scenario options (145);
✔ calculation of environmental impacts of printing processes (150);

2. environmental impact reportde label production (160);Method for analyzing environmental impacts of different printing systems in packaging according to claim 1, **CHARACTERIZED in that** the life cycle assessment method is standardized by ISO 14040/44.

3. Method for analyzing environmental impacts of different printing systems in packaging according com as reivindicações 1 and 2, **characterized in that** the label life cycle process mapping step (100) comprises at least the following sub-steps:
✔ definition of the substrates, inks, and printing processes that will be part of the environmental impact LCA;
✔ mapping the processes involved in the label life cycle;
✔ identificação das entradas and saídas;
✔ identificação das entradas and saídas conforme o padrão de nomenclatura do inventário de uma base de dados ACV internacional utilizada.

4. Method for analyzing environmental impacts of different printing systems in packaging according to claims 1 to 3 **characterized in that** the primary data collection step (110) comprises at least the following sub-steps:
✔ data collection containing at least:
- descrição das entradas and saídas;
- quantidade das entradas and saídas;
- unit of measure used;
- vida útil do material and qual o processo do inventário da base mundial de sustentabilidade está associado àquela entrada or saída a que se refere o lançamento;
✔ calculation of energy and material consumption ratios according to the reel dimensions;
✔ elaboração do arquivo de inventário por processo, contendo as quantidades (massa) and energia consumidas, por unidade de medida, das entradas and saídas de cada processo;
✔ converting the stored data to a format compatible with the platforms/software for the calculation of sustainability impacts.

5. Method for analyzing environmental impacts of different printing systems in packaging according to claims 1 to 3 **characterized in that** the environmental impact potential calculation step (120) comprises at least the following sub-steps:
✔ importing the final LCA inventory file into the open life cycle assessment platform;
✔ definition of the Life Cycle Impact Assessment Method (LCIA) and the environmental impact categories;
✔ cálculo, na plataforma aberta de avaliação do ciclo de vida, of the potential environmental impacts in each environmental impact category and export of the respective results to a potential environmental impacts database file 130, in a format suitable for use in the next phase of the method.

6. Method for analyzing environmental impacts of different printing systems in packaging according to claims 1 to 5 **characterized in that** the production order configuration step (140) preferably comprises the following input data:
✔ label height in millimeters;
✔ label width in millimeters;
✔ average length of the reel to be printed per production order, in meters;
✔ average width of the reel to be printed, in meters;
✔ número de ordens of production.

7. Method for analyzing environmental impacts of different printing systems in packaging according to claims 1 to 6 **characterized in that** the material, printing process, and scenario option selection step (145) includes entry of at least the following information:
✔ the identification of the scenario to be considered;
✔ the material to be used in label printing in the respective scenario; the material options may preferably be between pressure-sensitive or shrink sleeve label, from a list of types available for production, as previously mentioned in this report.
✔ the printing processes that will occur in the respective scenario and, for each process, whether ink or varnish will be used;
✔ when applicable, whether the printing process involves cold or hot stamping, for each scenario.
✔ whether the waste, in the respective scenario, deve or não ser descaracterizado.

8. Method for analyzing environmental impacts of different printing systems in packaging according to claims 1 to 7 **characterized in that** the material, printing process, and scenario option selection step (145) comprises the following sub-steps:
✔ calculating the environmental impacts for 1,000 labels by production processes involved;
✔ calculating the environmental impacts for 1,000 labels by printing processes, considering the number of times the process occurs as a multiplication factor;
✔ calculating the environmental impacts for 1,000 labels by film consumption for each printing technology, considering the number of times the process occurs as a multiplication factor;
✔ calculating the environmental impacts for 1,000 labels by selected printing technology, considering the number of times the process occurs as a multiplication factor;
✔ calculating the environmental impacts for 1,000 labels in ink and varnish consumption, considering the number of times the process occurs as a multiplication factor;
✔ obtaining the sum of all environmental impacts calculated above, resulting in the total impact per impact category for 1,000 labels.

9. Method for analyzing environmental impacts of different printing systems in packaging according to claims 1 to 8, **CHARACTERIZED in that** the production processes involved in phase 1 of the method (F1) include at least the following macro-processes:
✔ reel materials and waste;
✔ internal reel transport and warehouse;
✔ printing processes;
✔ produg5o do Clichê, chapas offset and tela silk;
✔ consumo de tintas and vernizes;
✔ reel cutting;
✔ verification process;
✔ printing waste disposal process.

10. ; Method for analyzing environmental impacts of different printing systems in packaging according to claim 1, **CHARACTERIZED in that** the material, printing process, and scenario option selection step (145) comprises the following sub-steps:
✔ depleção abiótica (minerais and metais);
✔ abiotic depletion (fossil fuels);
✔ acidification;
✔ eutrophication;
✔ global warming;
✔ ozone layer depletion;
✔ photochemical oxidation;
✔ water scarcity.

11. Method for analyzing environmental impacts of different printing systems in packaging according to claims 1 to 10, **CHARACTERIZED in that**, in the material selection step (145), the front face of the pressure-sensitive label may include, for each scenario, one of a plurality of materials with acrylic adhesive, in combination with PET liner or glassline.

12. Method for analyzing environmental impacts of different printing systems in packaging according to claims 1 to 10, **CHARACTERIZED in that**, in the material selection step (145), the selected shrink sleeve label substrate may include for each scenario, film PETg and PVC, at different thicknesses and shrinkage forces..

13. Method for analyzing environmental impacts of different printing systems in packaging according to claims 1 to 12, **CHARACTERIZED in that** the pressure-sensitive label printing process includes at least one of the following techniques: flexography, rotogravure, screen printing, offset, Cold fand hot stamping and the shrink sleeve label printing process includes at least one of the following techniques: flexography and rotogravure.

14. Method for analyzing environmental impacts of different printing systems in packaging according to claims 1 to 13, **CHARACTERIZED in that** the printing technology used is considered in the environmental impact calculation of the label.

15. Method for analyzing environmental impacts of different printing systems in packaging according to claims 1 to 14, **CHARACTERIZED in that** the total resulting environmental impact in each category is expressed as equivalencies for each of the compared scenarios.

16. Method for analyzing environmental impacts of different printing systems in packaging according to claims 1 to 15, **CHARACTERIZED in that** it is possible to update said method with new materials, processes, and technologies for the environmental impact calculation.

17. Method for analyzing environmental impacts of different printing systems in packaging according to claims 1 to 16, **CHARACTERIZED in that** said method is capable of generating environmental performance comparisons of various label printing scenarios simultaneously.
